# EUROPEAN PATENT SPECIFICATION

(11) **EP 3 038 722 B1**
(45) Date of publication and mention of the grant of the patent: **10.10.2018**
(21) Application number: 14840284.5
(22) Date of filing: 27.08.2014
(51) Int. Cl.: A63C 17/12, A63C 17/00, A63C 17/02, A63C 17/01, A63C 17/26, B62D 51/02

(54) **APPARATUS FOR BOARD SPORTS**
VORRICHTUNG FÜR BRETTSPORTARTEN
APPAREIL POUR SPORTS DE GLISSE

(30) Priority: 27.08.2013 AU 2013903244
(43) Date of publication of application: 06.07.2016
(73) Proprietor: Bajaboard International PTY LTD, Macleod, VIC 3085 (AU)
(72) Inventor: MURPHY, James Michael, Mont Albert North, Victoria 3129 (AU)
(74) Representative: Murgitroyd & Company
(86) International application number: PCT/AU2014/000840
(87) International publication number: WO 2015/027272

(56) References cited:
- US-A- 4 054 297
- US-A- 4 054 297
- US-A- 5 794 955
- US-A- 5 794 955
- US-A- 5 893 425
- US-A- 5 997 018
- US-A1- 2007 001 415
- US-A1- 2013 206 493

## Description

### FIELD OF THE INVENTION

The present invention relates to apparatus for board sports and in particular to wheeled apparatus for off-road board sports.

### BACKGROUND TO THE INVENTION

Board sports, such as skateboarding, long boarding and mountain boarding, are pursued by people as a popular past time, as an action sport or even as an extreme sport. Wheeled apparatus used for board sports typically comprise a board coupled to wheels via trucks. Generally these apparatus have four wheels and two trucks, one truck for the front wheels and one truck for the back wheels. The trucks typically comprise a base plate attached to the board and a hanger pivotally coupled to the base plate to support the wheels. The base plate is coupled to the hanger at an angle so that the hanger will turn toward the side to which the board is pivoted.

The base plate is typically coupled to the hanger via a king pin and bushings. The kingpin can be adjusted to provide more or less resistance to turning.

The wheels are coupled via bearings to the hanger and are maintained at a fixed angle relative to the hanger. The wheels on skateboards and long boards, for example, are typically made of solid polyurethane. One problem with such boards is that they can not be used effectively off-road.

One attempted solution to this problem is mountain boards. Mountain boards typically have larger, spoked wheels with tyres to enable them to more easily travel over rough terrain. However, like skateboards and long boards, mountain boards typically are limited to being ridden down hill or propelled by the user.

International patent publication WO 2006/053397 teaches an apparatus that addresses these limitations to an extent by providing a board with motorised track assemblies to enable the board to be propelled uphill. The track assemblies also assist the board to traverse soft ground and snow and reduce bogging. The board is connected to the track assemblies via a truck, similar to that of a skateboard, long board or mountain board. In some embodiments, the board is connected to the truck via a spring to absorb impact on rough ground. However, the use of tracks can negatively affect the handling of the board and limit the control the user has over the board. Also, US4054297 discloses a wheeled apparatus according to the preamble of claim 1.

The reference to any prior art in this specification is not, and should not be taken as, an acknowledgement or any form of suggestion that the prior art forms part of the common general knowledge.

### OBJECT OF THE INVENTION

It is a preferred object of the invention to provide an apparatus for board sports which addresses or at least ameliorates one or more of the aforementioned problems of the prior art and/or provides a useful commercial alternative.

Another preferred object of the invention is to provide an apparatus for board sports with improved and adjustable steering and handling, in particular during off-road use.

Skilled addressees will appreciate that the apparatus may also be used for applications other than board sports. For example, the apparatus may be used as an all terrain mobility vehicle for personal or even military purposes.

### SUMMARY OF THE INVENTION

Generally, embodiments of the present invention relate to apparatus for board sports and in particular to wheeled apparatus for off-road board sports.

According to one aspect, but not necessarily the broadest aspect, the present invention resides in a wheeled apparatus for board sports comprising:
a board;
a plurality of wheels supported by a plurality of steering knuckles; and
at least one linkage between the board and the steering knuckles to enable a camber and/or a caster and/or a toe angle of the wheels to be adjusted by pivoting the board,
wherein the at least one linkage comprises an electronic linkage in the form of a sensor for detecting pivoting of the board, the sensor in communication with an actuator coupled to one of the steering knuckles.

Preferably, the wheeled apparatus comprises four wheels.

Preferably, the wheeled apparatus further comprises a chassis to which the board is pivotally coupled.

Preferably, the board pivots laterally about the chassis.

Preferably, the wheeled apparatus comprises one or more suspension systems coupled to the chassis and to the steering knuckles.

Preferably, the one or more suspension systems include a left suspension system and a right suspension system, and an anti-roll bar is coupled between the left suspension system and the right suspension system to mitigate a rolling of the chassis when the board is pivoted.

Preferably, the at least one linkage pivots the respective steering knuckle about a pivot axis defined by one or more of the suspension systems.

Preferably, the wheeled apparatus further comprises one or more springs coupled to the board and the chassis to resist the pivoting of the board and to return the board to a neutral position.

Suitably, the wheeled apparatus comprises one or more steering links coupled between the board and the steering knuckles to enable the wheels to be steered by pivoting the board.

Preferably, each steering knuckle is coupled to the board with a respective steering link and/or linkage to provide independent steering, and/or camber and/or caster and/or toe angle adjustment, of each wheel by pivoting the board.

Preferably, the wheeled apparatus comprises one or more motors to drive one or more of the plurality of wheels.

Preferably, the wheeled apparatus comprises a controller in communication with the one or more motors to enable a user to control the speed and direction of the one or more motors.

Preferably, the wheeled apparatus comprises a carriage fixed to the board to house one or more batteries and/or control systems to power and/or control the motors.

According to another aspect, but not necessarily the broadest aspect, the present invention resides in a method of constructing a wheeled apparatus for board sports, the apparatus comprising a board and a plurality of wheels supported by a plurality of steering knuckles, the method comprising:
coupling at least one linkage between the board and the steering knuckles to enable a camber, a caster and/or a toe angle of the wheels to be adjusted by pivoting the board,

Further features and/or aspects of the present invention will become apparent from the following detailed description.

### BRIEF DESCRIPTION OF THE DRAWINGS

In order that the invention may be readily understood and put into practical effect, reference will now be made to preferred embodiments of the present invention with reference to the accompanying drawings, wherein like reference numbers refer to identical elements. The drawings are provided by way of example only, wherein:
FIG 1 is a perspective view of a chassis of a wheeled apparatus for board sports, according to one embodiment of the present invention;
FIG 2 is a side sectional view of the wheeled apparatus of FIG 1;
FIG 3 is a perspective view of a wheeled apparatus comprising the chassis of FIG 1, according to one embodiment of the present invention;
FIG 4 is an underside view of the wheeled apparatus shown in FIG 3;
FIG 5 is a cross-sectional view of the wheeled apparatus shown in FIG 3;
FIG 6 is a top view of a linkage arm assembly of the wheeled apparatus shown in FIG 3;
FIG 7 is a top view of a suspension arm assembly of the wheeled apparatus shown in FIG 3;
FIG 8 is a top view of a steering knuckle of the wheeled apparatus shown in FIG 3;
FIG 9 is a perspective view of a chassis of a wheeled apparatus for board sports, according to another embodiment of the present invention;
FIG 10 is a side view of the wheeled apparatus of FIG 9;
FIG 11 is a perspective view of a body of a support structure of the chassis shown in FIG 9
FIG 12 is a perspective view of a wheeled apparatus comprising the chassis of FIG 9, according to one embodiment of the present invention;
FIG 13 is an underside view of the wheeled apparatus shown in FIG 12;
FIG 14 is a top view of the wheeled apparatus shown in FIG 12;
FIG 15 is a front view of the wheeled apparatus shown in FIG 12;
FIG 16 is a perspective view of a steering knuckle of the wheeled apparatus shown in FIG 12;
FIG 17 is a top view of a steering arm assembly of the wheeled apparatus shown in FIG 12;
FIG 18 is a top view of a drive shaft of the wheeled apparatus shown in FIG 12;
FIG 19 is a top view of a suspension arm assembly of the wheeled apparatus shown in FIG 12;
FIG 20 is a top view of a spring and shock absorber of the wheeled apparatus shown in FIG 12; and
FIG 21 is a flow diagram of a method of constructing a wheeled apparatus for board sports, according to one aspect of the present invention.

Skilled addressees will appreciate that elements in the drawings are illustrated for simplicity and clarity and have not necessarily been drawn to scale. For example, the relative dimensions of some of the elements in the drawings may be distorted to help improve understanding of embodiments of the present invention.

### DETAILED DESCRIPTION OF THE PREFERRED EMBODIMENTS

Generally, embodiments of the present invention relate to apparatus for board sports and in particular to wheeled apparatus for off-road board sports. Skilled addressees will appreciate that the apparatus may also be used for general mobility and transportation purposes.

The wheeled apparatus comprises a board to support a rider and a plurality of wheels supported by a plurality of steering knuckles. At least one linkage is coupled between the board and the steering knuckles to enable a camber and/or a caster and/or a toe angle of the wheels to be adjusted by the rider pivoting the board. Adjustments of the camber and/or the caster and/or the toe angle of the wheels can change the behaviour of the apparatus during cornering. For example, such adjustments can facilitate drift of the apparatus as it corners.

In preferred embodiments, the steering knuckles and hence the wheels are supported by a chassis, for example, via a suspension system. The board, and/or a board assembly comprising the board, is pivotally coupled to the chassis and pivots relative to the chassis. The at least one linkage comprises an electronic linkage in the form of a sensor for detecting pivoting of the board. The sensor is in communication with one or more actuators coupled to one or more of the steering knuckles. These arrangements will be described in further detail with reference to the embodiments shown in the drawings.

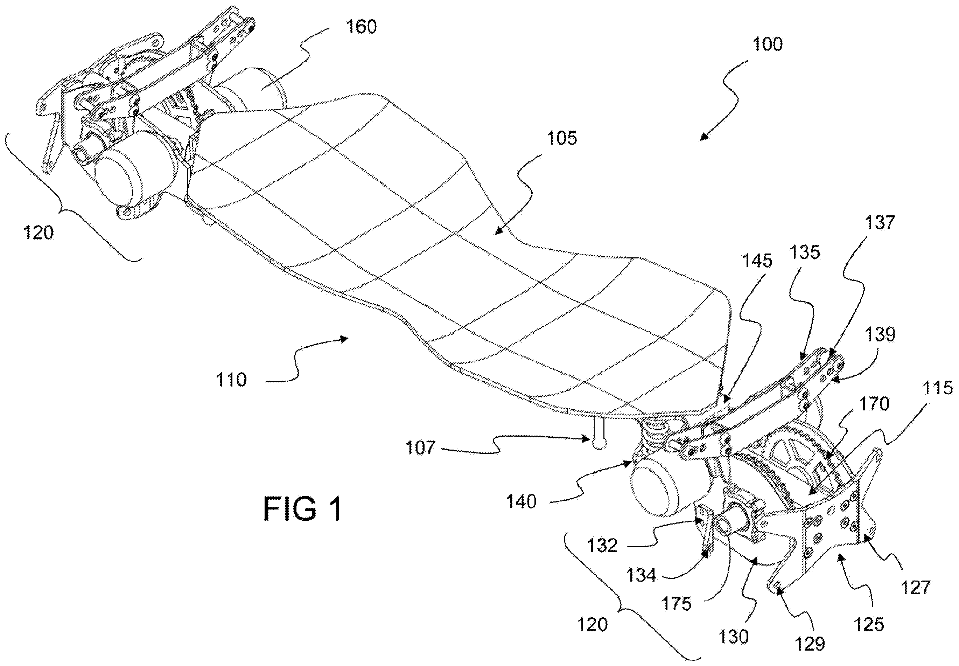

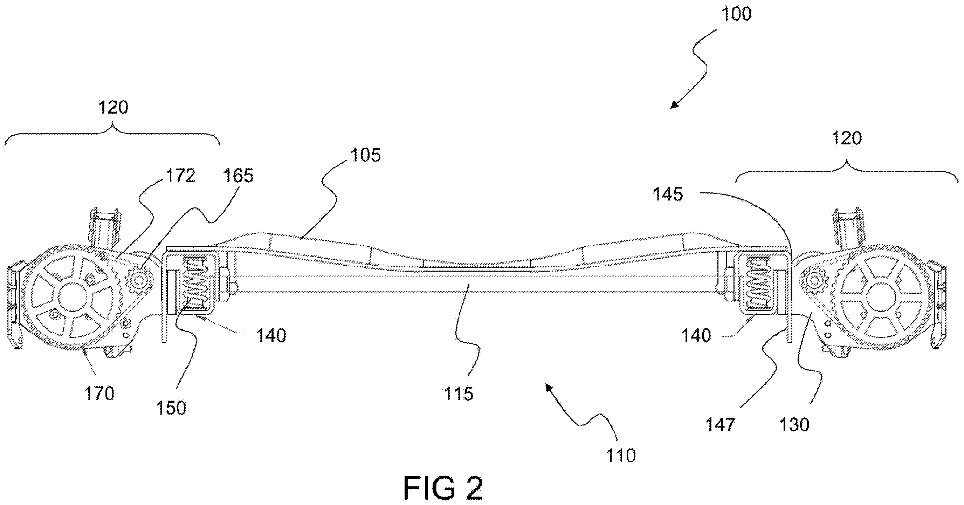

FIGS 1 and 2 show a perspective view and a side sectional view respectively of a chassis 110 of a wheeled apparatus 100 for board sports, according to one embodiment of the present invention. For the sake of clarity, FIGS 1 and 2 show the apparatus 100 with various components of the apparatus removed, such the wheels, suspension and steering systems. However, the components omitted from FIGS 1 and 2 will be discussed hereinafter with reference to other drawings.

With reference to FIGS 1 and 2, the chassis 110 comprises a support frame 120 coupled and/or fixed at each end of an elongate bar 115. A board 105 to support a rider is pivotally coupled to the chassis 110. Each support frame 120 comprises a linkage plate 125, two parallel side plates 130, a shock tower 135 and a first bracket 140. The linkage plate 125 and the first bracket 140 are coupled to the elongate bar 115. The linkage plate 125 and the shock tower 135 are coupled to side plates 130.

The linkage plate 125 comprises four connecting points 127 having apertures 129 to couple suspension arm assemblies and linkages to the linkage plate 125.

The side plates 130 each support a mechanism for driving the wheeled apparatus 100. The mechanism comprises a motor 160 coupled to a first sprocket 165. The first sprocket is coupled to a second sprocket 170 via a drive chain 172. The second sprocket 170 is larger than the first sprocket 165 to gear down the speed of the motor for transmission to the wheels. The second sprocket 170 is coupled to a connector 175 to which a drive shaft is coupled for connection to a wheel. Each side plate 130 further comprises a connection bracket 132 having an aperture 134 for connecting to a suspension arm assembly, as will be described in further detail herein.

The shock tower 135 of each support frame 120 extends perpendicularly to the side plates 130 and comprises pins 137 for coupling spring and shock absorbers to the shock tower 135. Three sets of apertures 139 are provided at either side of the shock tower 135 to enable the position of the pins 137, and therefore the connection point and angle of the spring and shock absorbers, to be adjusted. In some embodiments, the number of sets of apertures 139 may be greater than or less than three.

A second bracket 145 is pivotally coupled to the first bracket 140 and is fixed to the underside of the board 105 to enable the board to pivot relative to the chassis 110 about a pivot axis. Springs 150 are coupled to the first bracket 140 and the second bracket 145 on either side of the pivot point to resist the pivoting of the board 105 and to return the board 105 to a neutral position. For example, where the board pivots laterally, a neutral position is when the board 105 is laterally level relative to the chassis 110.

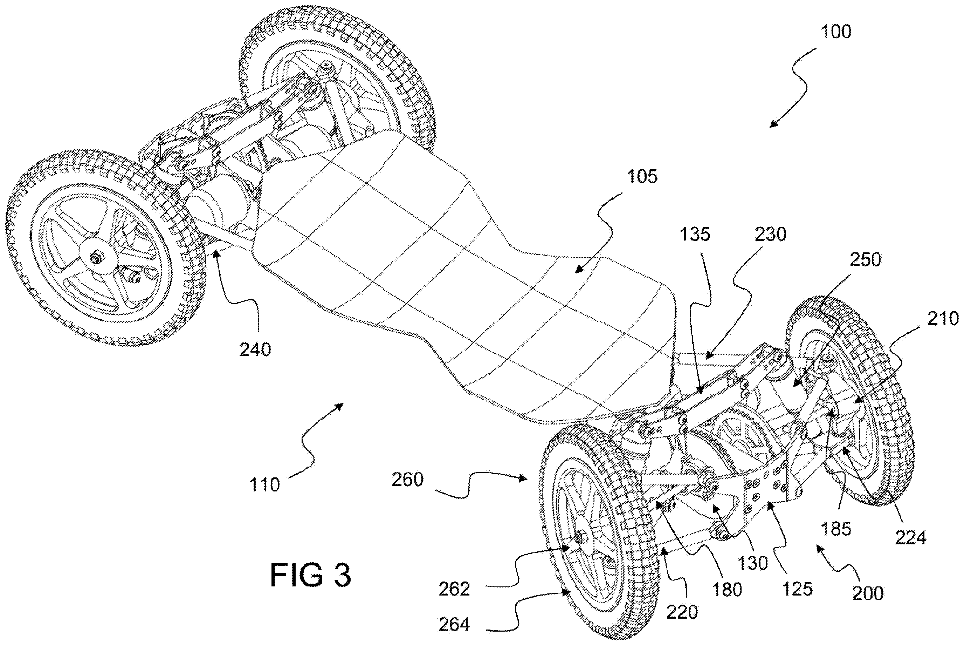

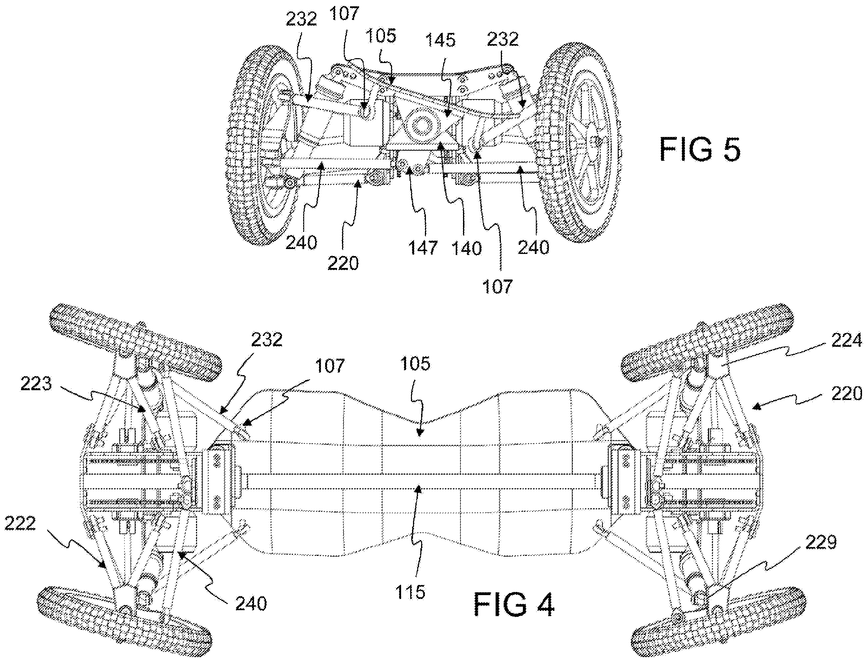

FIG 3 shows a perspective view of the wheeled apparatus 100 for board sports shown in FIGS 1 and 2, with the wheels, suspension and steering systems attached and FIG 4 shows an underside view of the apparatus shown in FIG 3. Further features of the apparatus 100 will now be described with reference to FIGS 3 and 4.

The wheeled apparatus 100 comprises four wheels 260 supported by four steering knuckles 210. The four steering knuckles 210 are coupled to the chassis 110 via suspension systems 200. The suspension systems 200 comprise suspension arm assemblies 220, linkage arm assemblies 230, steering links 240 and spring and shock absorbers 250.

Each linkage arm assembly 230 comprises a linkage arm 232 pivotally coupled between the board 105 and each steering knuckle 210 to enable a camber and/or a caster and/or a toe angle of the wheels 260 to be adjusted independently by pivoting the board 105. The linkage arms 232 are pivotally coupled to the board via ball joints to the coupling points 107. The linkage arms 232 are also pivotally coupled to the upper connection points 127 of the linkage plates 125 of the chassis 110 by a ball joint.

Each steering link 240 is pivotally coupled at one end to a tail 147 of the second bracket 145 and pivotally coupled at the other end to a respective steering knuckle 210 to enable the wheels 260 to be steered by pivoting the board 105. Each wheel 260 is coupled to a respective steering knuckle 210 with a respective steering link 240 for independent steering of each wheel 260.

Each of the suspension arm assemblies 220 comprises two arms 222, 223 and is coupled at a body 224 of the arms to one of the steering knuckles 210. One of the arms 222 is coupled to one of the lower connection points 127 of one of the linkage plates 125 and another of the arms 223 is coupled to the connection bracket 132 on one of the side plates 130. The spring and shock absorbers 250 are rotatably coupled to the body 224 of a respective suspension arm assembly 220 via a fastener at coupling point 229 and rotatably coupled to a respective shock tower 135 via the pins 137. Hence, in the preferred embodiment shown in FIG 3, each wheel is provided with independent suspension.

Drive shafts 180 are coupled between the connectors 175 and the wheels 260 via constant velocity joints 185 to enable the motor 160 to drive the wheels.

The wheels 260 have spokes 262 for structural support and have tyres 264 to provide grip on the ground. The spokes 262 can also enable the wheel to be lighter than a solid wheel and the tyres can absorb bumps to provide a smoother ride. The board 105 is shaped to enable a rider to stand, kneel, sit and/or lie on the board. For example, the board 105 can comprise a waist between two wider regions for accommodating the rider's feet. The board 105 can be concave to accommodate the rider in a prone position and can comprise raised side edges to assist in retaining the rider on the board when pivoting the board and cornering.

FIG 5 shows a cross-sectional view of one end of the wheeled apparatus 100 shown in FIG 3. FIG 5 shows positions of the linkage arms 232 and the steering links 240 with the board 105 pivoted to a right hand side of the neutral position. The pivoting of the board 105 toward the right hand side of the apparatus 100 moves the tail 147 of the second bracket 145 toward the left hand side of the apparatus 100. The steering links 240, which are coupled to the tail 147 of the second bracket 145, pull or push the steering knuckles 210, thus turning the wheels 260 and causing the apparatus 100 to turn toward the right hand side to which the board 105 is pivoted.

Pivoting the board 105 toward the right hand side of the apparatus 100 also moves the coupling points 107. The coupling point 107 on the right hand side moves in a downward direction and the coupling point 107 on the left hand side moves in an upward direction. The linkage arms 232, which are coupled to the coupling points 107 and the steering knuckles 210, therefore pull the steering knuckle 210 on the right hand side and push the steering knuckle 210 on the left hand side to change the camber and/or the castor and/or the toe angle of the wheels 260. This tilts the wheels further towards the centre of the apparatus 100 thereby reducing the contact area of the tyres with the ground and encouraging drift. There is also a corresponding effect on the camber and/or the castor and/or the toe angle of the wheels 260 at the other end of the apparatus 100. It will be appreciated that pivoting the board 105 in the opposite direction will have the opposite effects.

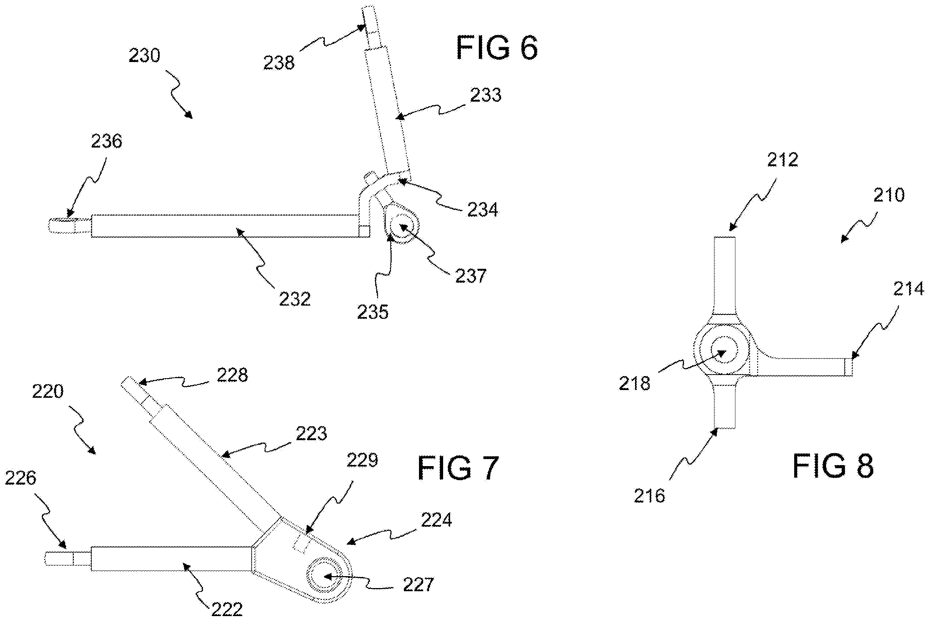

FIG 6 shows a top view of the linkage arm assembly 230 of the wheeled apparatus 100 shown in FIG 3. The linkage arm assembly 230 comprises a first arm or rod 232 and a second arm or rod 233 coupled to a corner bracket 234. The first arm 232 comprises an aperture 236 for pivotally coupling the first arm 232 via a ball joint to the coupling point 107 of the board 105. A pin 235 is pivotally coupled to the corner bracket 234 and the pin comprises an aperture 237 for pivotally coupling the linkage arm assembly 230 to the steering knuckle 210. The second arm 233 comprises an aperture 238 for pivotally coupling the second arm 233 via a ball joint to the linkage plate 125 of the support frame 120 of the chassis 110.

FIG 7 shows a top view of the suspension arm assembly 220 of the wheeled apparatus 100 shown in FIG 3. The suspension arm assembly comprises two arms 222, 223 coupled to a body 224. The body 224 comprises a recess and aperture 227 to which the steering knuckle 210 is pivotally mounted. Body 224 also comprises an aperture 229 to receive a fastener to couple the spring and shock absorber 250 to the suspension arm assembly 220. The first arm 222 comprises an aperture 226 for coupling the first arm 222 to the linkage plate 125 via a ball joint. The second arm 223 comprises an aperture 228 for coupling the second arm 223 to the connection bracket 132 attached to the side plate 130.

FIG 8 is a top view of the steering knuckle 210 of the wheeled apparatus 100 shown in FIG 3. The steering knuckle 210 comprises a first connection point 212, a second connection point 214, a third connection point 216 and an aperture 218. The first connection point 212 is for pivotally coupling the steering knuckle 210 to the pin 235 of the linkage arm assembly 230. The second connection point 214 is for pivotally coupling the steering knuckle 210 to the steering link 240. The third connection point 216 is for pivotally coupling the steering knuckle 210 to the body 224 of the suspension arm assembly 220. Aperture 218 accommodates the CV joint 185 for the wheel 260. The steering knuckles 210 on opposite sides or ends of the apparatus 300 can be mirror images of one another. For example, the structure of the steering knuckle 210 shown in FIG 8 may be for one side of the apparatus. A steering knuckle 210 for an opposite side of the apparatus 100 comprises the same structure mirrored along an axis between connection points 212 and 216.

Preferred embodiments of the present invention have been described with reference to FIGS 1-8. However, other embodiments are envisaged that fall within the scope of the present invention. The invention will be described more generally hereinafter with specific examples where necessary.

Generally, embodiments of the wheeled apparatus 100 can have two or more wheels 260. In one embodiment, the wheeled apparatus 100 has one wheel on either side of the board 105. In this embodiment, a linkage is provided to enable a castor and/or camber and/or or toe angle of the wheels 260 to be adjusted by pivoting the board 105. In another embodiment, the apparatus 100 comprises two wheels at one end and a single wheel at the other end. The end with two wheels can be configured as shown at one end of the embodiment shown in FIG 3.

In some embodiments the board 105 pivots laterally to adjust the castor and/or camber and/or toe angle and/or the steering of the wheels. In some embodiments, the board 105 is pivoted longitudinally. In some embodiments, the board 105 can also be pivoted longitudinally to control the speed and/or direction of the one or more motors 160 where the apparatus 100 is motorised.

While the apparatus 100 comprises a chassis 110 in the preferred embodiments described herein, it is envisaged that embodiments of the apparatus 100 can be implemented without a chassis. In such embodiments, support frames 120 can be coupled to the board 105 by first bracket 140.

It will be appreciated by persons skilled in the art that the support frame 120 can be implemented in a variety of ways. For example, according to some embodiments, instead of two side plates 130 connected by the linkage plate 125 and the sprockets mounted to the inner faces of the side plates, a centrally located single plate can be provided with the sprockets mounted on either side. This alternative enables the linkage plate 125 to be replaced by a smaller linkage plate, such as an "X" shaped plate with effectively just four connecting points 127. In another embodiment, it is envisaged that the first bracket 140 and the second bracket 145 can be redesigned into a single bracket.

Embodiments of the wheeled apparatus 100 can comprise one or more motors 160 to drive one or more of the plurality of wheels 260. For example, a single motor can be configured to drive all of the wheels, a separate motor can drive each wheel, or a separate motor can drive each set of wheels, e.g. each pair of wheels. One or more brushless DC (BLDC) electric motors can be used, but other types of motor can also be used. For example, in some embodiments a hub motor can be used within one or more of the wheels 260 with each such wheel coupled to the chassis 110 by the suspension arm assemblies 220.

Whilst FIG 2 shows a drive chain 172 coupling the first and second sprockets 165, 170, it will be appreciated that alternative components can be used for the transmission of power from the motor(s) 160 to the wheels 260, such as belts, further gearing and/or shaft drive assemblies. In another embodiment, the motors 160 can directly drive the wheels 260, removing the need for any sprockets, gears or belts. In this embodiment, suitably sized motors 160 replace the second sprockets 170, the connectors 175 are attached directly to the motors 160, and the drive shafts 180 are coupled between the connectors 175 and the wheels 260 via constant velocity joints 185 to enable to motors 160 to directly drive the wheels 260.

The wheeled apparatus 100 can comprise a controller in communication with the one or more motors 160 to enable a user to control the speed and direction of the one or more motors. In some embodiments, the controller is an electronic controller connected to the board, which can be implemented with a programmable circuit board. In some embodiments, the controlled is a mechanical controller. In some embodiments, the controller can be designed to be operated by the user via hand and/or foot. The controller can also be a remote controller operating wirelessly.

Although not shown in the drawings, some embodiments of the wheeled apparatus 100 comprise an undercarriage or casing affixed to the chassis 110 and/or the board 105 to hold and protect various components of the apparatus 100, such as batteries, controller units, a wireless receiver and/or cabling, from water, dust, debris and from impacts with obstacles, such as rocks.

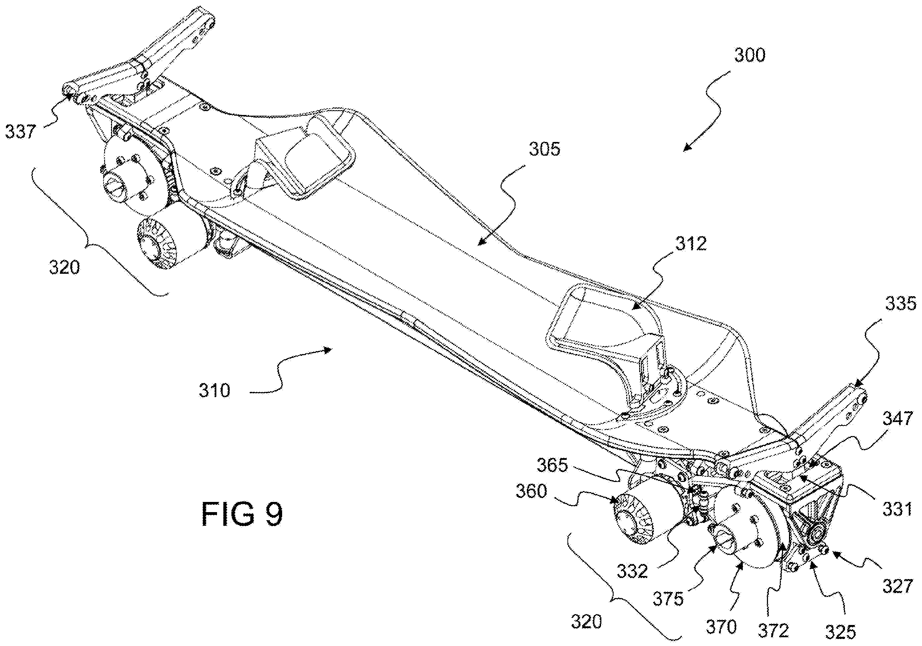

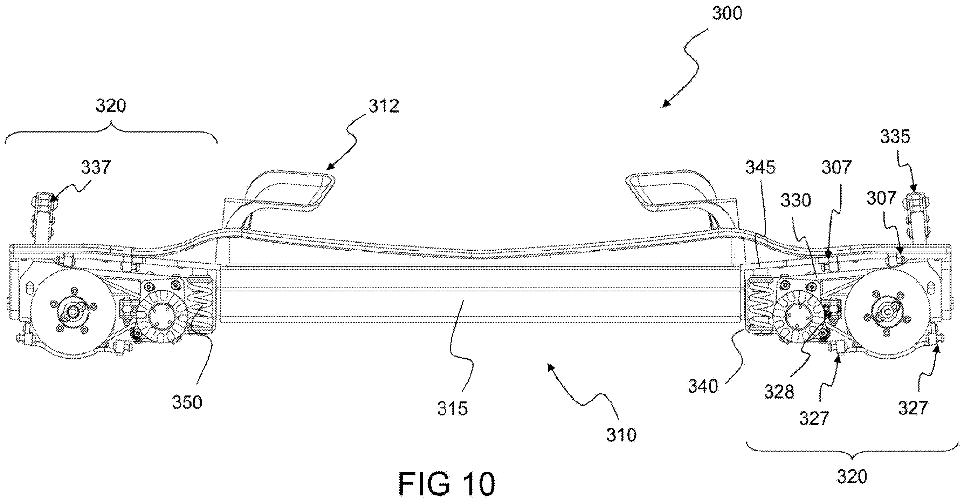

FIGS 9 and 10 show a perspective view and a side view respectively of a chassis 310 of a wheeled apparatus 300 for board sports, according to another embodiment of the present invention. The chassis 310 comprises two support frames 320. The support frames 320 are pivotally coupled at each end of a carriage 315. A board 305 to support a rider is pivotally coupled to the chassis 310, for example, via the carriage 315.

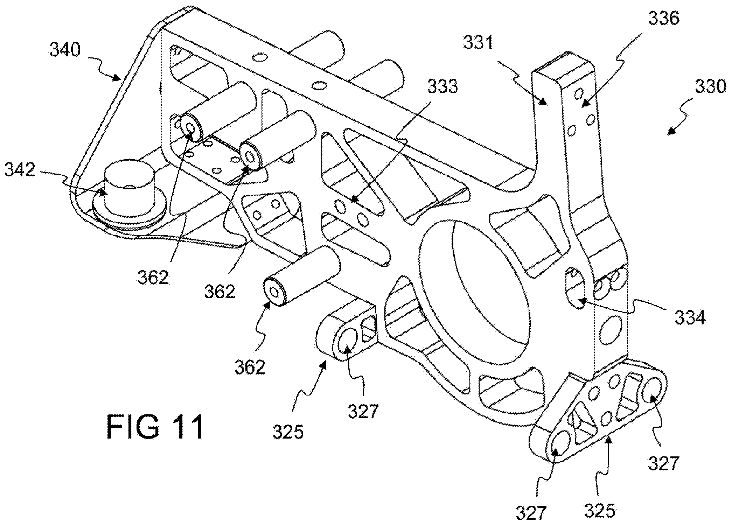

Each support frame 320 comprises a body 330 onto which other components of the support frame 320 are mounted. For example, the body 330 can be a unitary structure (as shown in Figure 11). An inner end of the body 330 is pivotally coupled to the carriage 315 via a first bracket 340. In preferred embodiments, the carriage 315 is elongate and load bearing. For example, the carriage provides a rigid linkage between the two support frames 320. The carriage 315 is fixed to the underside of the board 305. An outer end of the body 330 is pivotally coupled to the board 305 via a second bracket 345. The second bracket 345 is fixed to the underside of the board 305. The board 305, the carriage 315 and the second bracket 345 can be considered to form a board assembly which pivots relative to the chassis 310 about a pivot axis.

The second bracket 345 extends along the body 330 past the inner end of the body 330. Springs 350 are coupled between the first bracket 340 and the second bracket 345 on either side of the pivot axis to resist the pivoting of the board 305 and to return the board 305 to a neutral position.

A shock tower 335 is coupled to an upright 331 of the body 330. The upright 331 extends through an aperture 347 in the second bracket 345 and the board 305. In one embodiment, the lateral width of the aperture 347 limits the range of lateral movement of the board 305 relative to the upright 331 and therefore limits the angle to which the board 305 can pivot relative to the chassis 310. The shock tower 335 comprises pins 337 for coupling spring and shock absorbers to the shock tower 335.

Connecting points are provided to couple a suspension system to the body 330. In the embodiment shown, two of the connecting points 327 are located at a base of the body 330 on each side of the body 330 with one of the two connecting points 327 located toward the outer end of the body 330 and the other located toward the inner end of the body 330. The two connecting points 327 can be located on linkage plates 325 that are fixed to the body 330 or integral with the body 330. A further connecting point 328 on either side of the body 330 is located part way up the body 330 and toward the inner end of the body 330. The further connecting point 328 can be located on a connection bracket 332 that is fixed to the body.

Coupling points 307 are provided on either side of the second bracket 345 to couple a steering system to the board 305. For example, in the embodiment shown, two coupling points 307 are provided on either side of the second bracket 345.

The body 330 supports a mechanism for driving the wheeled apparatus 300. The mechanism comprises a motor 360 coupled to a first sprocket 365 on either side of the body 330. The first sprocket 365 is coupled to a second sprocket 370 via a drive belt 372. The second sprocket 370 is larger than the first sprocket 365 to gear down the speed of the motor 360 for transmission to a wheel on the respective side of the body 330. The second sprocket 370 is coupled to a connector 375 to which a drive shaft 380 is coupled for connection to the wheel. The carriage 315 can house a power supply, for example, one or more batteries, to power the motors 360. The carriage 315 can also house one or more control systems to control the motors. In an alternative embodiment, a carriage housing one or more batteries and/or control systems can be fixed to an upper side of the board.

In another embodiment, the motors 360 can directly drive the wheels 460, removing the need for any sprockets, gears or belts. This can be achieved by locating suitably sized motors 360 in place of the second sprockets 370. The connectors 375 would then be attached directly to the motors 360, and the drive shafts 372 would be coupled between the connectors 375 and the wheels 460 via constant velocity joints to enable to motors 360 to directly drive the wheels 460.

Bindings 312 are provided on the board 305 to secure the feet of the rider. In the embodiment shown, the bindings 312 are semi-open. However, the bindings can be fully closed bindings or any other suitable bindings and in one embodiment, the board 305 has no bindings.

FIG 11 a body 330 of the wheeled apparatus 300 that is a unitary structure according to one embodiment. Two connecting points 327 in the form of longitudinally oriented apertures are located on linkage plates 325 at the base of the body 330 that extend laterally on each side of the body 330. The two apertures each receive a pin to couple respective arms of a suspension arm assembly.

Two bracket mounting holes 333 are provided to mount the connection bracket 332 to the body 330. Three shock tower mounting holes are provided in the upright 331 of the body 330 to mount the shock tower to the body 330. Three motor stands 362 extend laterally from either side of the body 330 at the inner end of the body 330 for mounting the motors 360. A hole 334 is located toward the outer end of the body 330 to receive an anti-roll bar.

A bracket 340 is mounted to the body 330 or formed integrally with the body 330. A mount point 342 is provided on the bracket 340 for the spring 350.

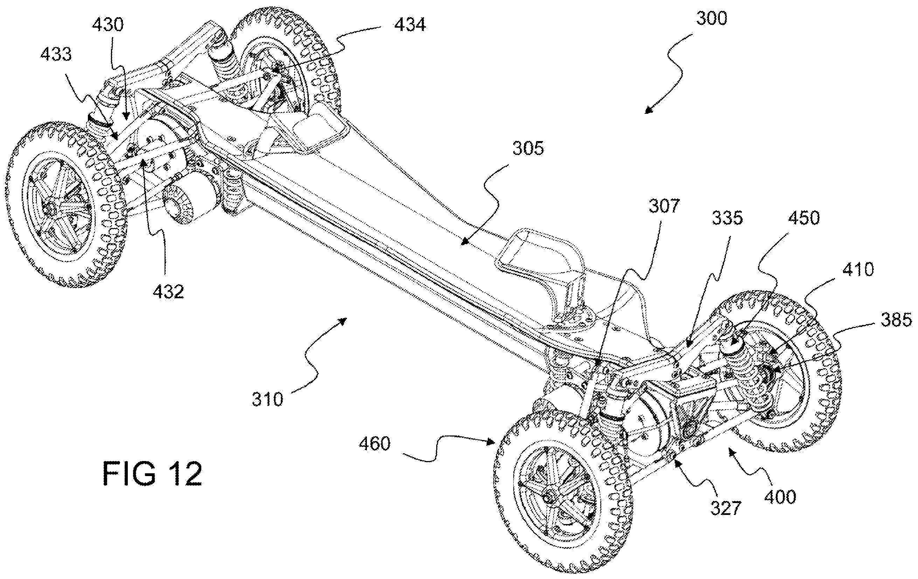

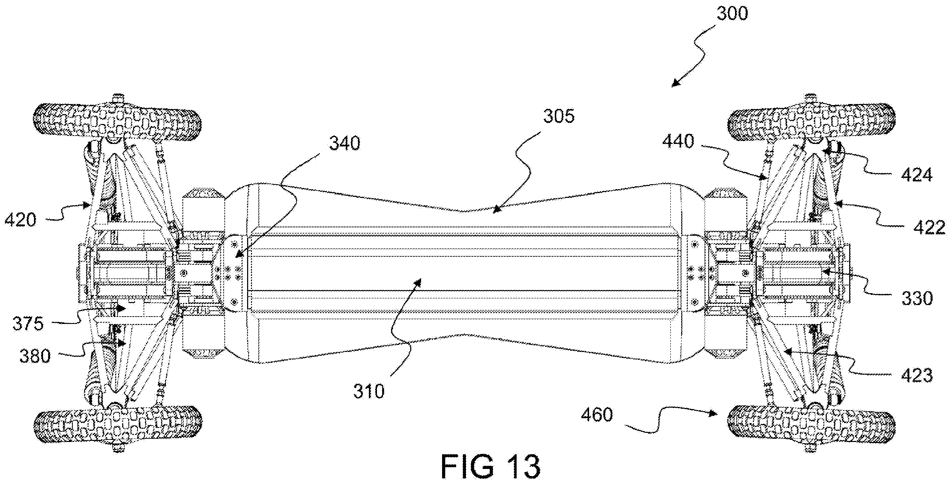

FIG 12 shows a perspective view of the wheeled apparatus 300 for board sports shown in FIGS 9 and 10, with the wheels, suspension and steering systems attached and FIG 13 shows an underside view of the apparatus shown in FIG 12. Further features of the apparatus 300 will now be described with reference to FIG 12 and FIG 13.

The wheeled apparatus 300 comprises four wheels 460 supported by four steering knuckles 410. The four steering knuckles 410 are coupled to the chassis 310 via suspension systems 400. The suspension systems 400 comprise suspension arm assemblies 420, steering or linkage arm assemblies 430, spring and shock absorbers 450 and further suspension arms 440. Each of the suspension arm assemblies 420 comprises two arms 422, 423 and is coupled at a body 424 of the arms to one of the steering knuckles 410. The arms are each coupled to one of the two connection points 327 at the base of the body 330.

The spring and shock absorbers 450 are rotatably coupled to the body 424 of a respective suspension arm assembly 420 via a fastener at coupling point 429 and rotatably coupled to a respective shock tower 335 via the pins 337.

Each further suspension arm 440 is pivotally coupled at one end to a respective further connecting point 328 and pivotally coupled at the other end to a respective steering knuckle 410. Hence, in the embodiment shown in FIG 12, each wheel is provided with an independent suspension system 400.

The four steering knuckles 410 are coupled to the board 305 via the steering or linkage arm assemblies 430. Each wheel 460 has its own steering arm assembly 430 to enable independent steering of each wheel, and for example, independent adjustment of camber, caster and/or toe angle of each wheel 460.

Each steering arm assembly 430 comprises two arms 432, 433 and is coupled at a body 434 of the arms to one of the steering knuckles 410. The arms are each coupled to one of the two coupling points 307 on the second bracket 345 to enable a camber and/or a caster and/or a toe angle of the wheels 460 to be adjusted independently by pivoting the board 305. In this embodiment, the steering arm assemblies 430 also enable the wheels 460 to be steered by pivoting the board 305.

Drive shafts 380 are coupled between the connectors 375 and the wheels 460 via constant velocity joints 385 to enable the motor 360 to drive the wheels 460.

The board 305 is shaped to enable a rider to stand, kneel, sit and/or lie on the board. For example, the board 305 is concave to accommodate the rider in a prone position and comprises raised side edges to assist in retaining the rider on the board when pivoting the board and cornering.

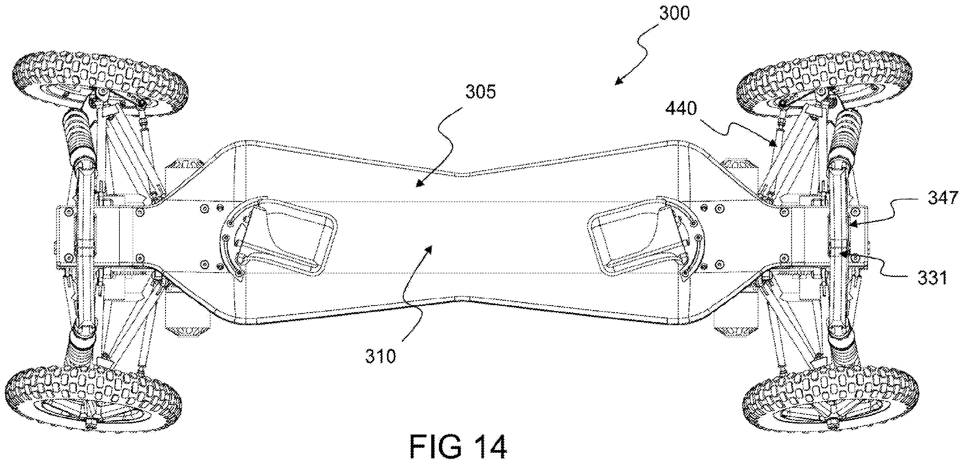

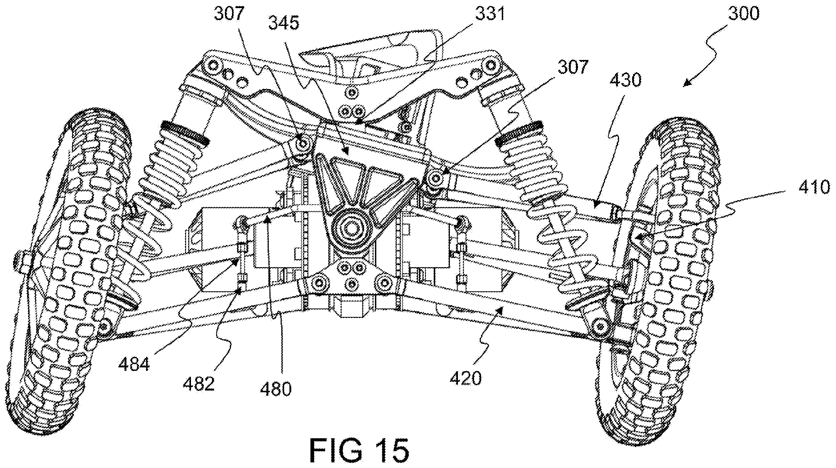

FIGS 14 and 15 show a top view and a front view respectively of the wheeled apparatus 300 for board sports shown in FIG 12. In FIGS 14 and 15 the board 305 is pivoted to a left hand side of the neutral position. The board 305 has pivoted such that the upright 331 is against the edge of the aperture 347 and limits the board 305 from pivoting further relative to the chassis 310.

Rolling of the chassis 310 when the board 305 is pivoted can reduce the effectiveness of the steering arm assembly 430. An anti-roll bar 480 is provided to mitigate a compression or extension of the spring and shock absorbers 450 when the board 305 is pivoted and hence mitigate a rolling of the chassis 310 when the board 305 is pivoted. The anti-roll bar 480 is coupled between the suspension arm assembly 420 on the left side of the body 330 and the suspension arm assembly 420 on the right side of the body 330. The anti-roll bar 480 extends through the hole 334 in the body 330 (see FIG 11). The anti-roll bar 480 is coupled to each suspension arm assembly 420 via a connecting rod 482. In the embodiment shown, the connecting rod 482 comprises a thread link 484 for adjusting the length of the connecting rod 482 and hence adjusting the effect of the anti-roll bar 480.

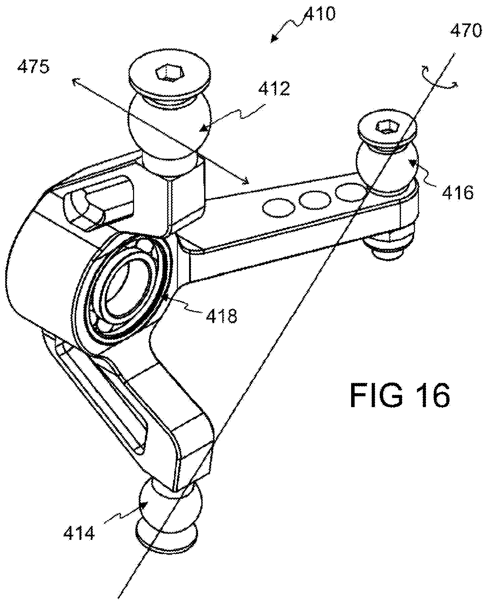

Pivoting the board 305 toward the left hand side of the apparatus 300 moves the coupling points 307 on the left hand side of the second bracket 345 toward the left and downward and moves the coupling points 307 on the right hand side of the second bracket 345 toward the left and upward. The steering arm assemblies 430, which are coupled to the coupling points 307 and the steering knuckles 410, therefore pull the steering knuckle 410 on the right hand side and push the steering knuckle 410 on the left hand side which changes the camber and/or the castor and/or the toe angle of the wheels 460. The suspension arm assemblies 420 and the further suspension arms 440 provide a pivot axis around which the steering knuckles 410 rotate. The pivot axis is shown in more detail in FIG 16.

FIG 16 is a perspective view of the steering knuckle 410 of the wheeled apparatus 300 shown in FIG 12. The steering knuckle 410 comprises a first connection point 412, a second connection point 414, a third connection point 416 and an aperture 418. The first connection point 412 is for pivotally coupling the steering knuckle 410 to a pin of the linkage arm assembly 430. The second connection point 414 is for pivotally coupling the steering knuckle 410 to the body 424 of the suspension arm assembly. The third connection point 416 is for pivotally coupling the steering knuckle 410 to the further suspension arm 440. Aperture 418 accommodates the CV joint 485 for the wheel 460. The steering knuckles 410 on opposite sides or ends of the apparatus 300 can be mirror images of one another. For example, the steering knuckle 410 may be mirrored along an axis between connection points 475 and 414 depending on the side of the apparatus 300 one which it is installed.

The coupling of the second connection point 414 and the third connection point 416 to the body 330 via the suspension system creates a pivot axis 470 around which the aperture 418, and hence the wheel 460, can pivot. The wheel 460 is pivoted via the movement of the first connection point 412 along the line 475 when then board 305 is pivoted about the chassis 310. This pivoting of the wheel causes the wheel 460 to steer for example, to the left and tilt towards the centre of the apparatus 300 thereby reducing the contact area of the tyres with the ground and encouraging drift.

There is also a corresponding effect on the camber and/or the castor and/or the toe angle of the wheel 460 at the rear of the apparatus 300. It will be appreciated that pivoting the board 305 in the opposite direction will have the opposite effects.

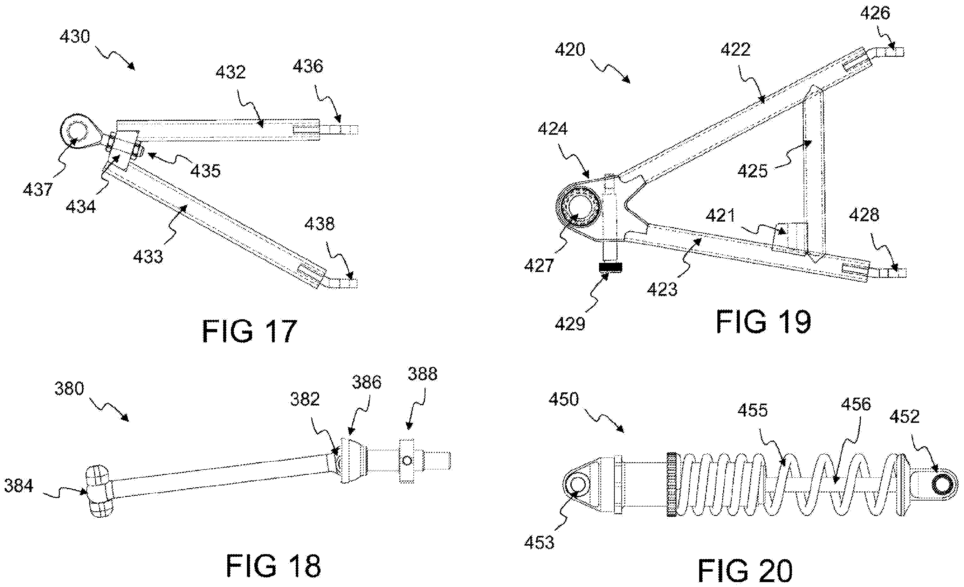

FIG 17 shows a top view of the steering arm assembly 430 of the wheeled apparatus 300 shown in FIG 12. The steering arm assembly 430 comprises a first arm or rod 432 and a second arm or rod 433 coupled to a corner bracket 434. The first arm 432 comprises an aperture 436 for pivotally coupling the first arm 432 to one of the coupling points 307. A pin 435 is pivotally coupled to the corner bracket 434 and the pin comprises an aperture 437 for pivotally coupling the steering arm assembly 430 to the steering knuckle 410. The second arm 433 comprises an aperture 438 for pivotally coupling the second arm 433 to the other coupling point 307.

FIG 18 shows a top view of the drive shaft 380. A first end 382 of the drive shaft 380 is adapted to be received by the CV joint 386. An opposing side of the CV joint 386 is coupled to a shaft 388 which adapted to be received in the aperture 418 of the steering knuckle 410. A second end 384 of the drive shaft 380 is adapted to be connected to the connector 375.

FIG 19 shows a top view of the suspension arm assembly 420 of the wheeled apparatus 300 shown in FIG 12. The suspension arm assembly comprises two arms 422, 423 coupled to a body 424. The body 424 comprises a recess and aperture 427 to which the steering knuckle 410 is pivotally mounted. Body 424 also comprises a pin 429 to attach the spring and shock absorber 450 to the suspension arm assembly 420. The first arm 422 comprises an aperture 426 for coupling the first arm 422 to one of the two connecting points 327 at the base of the body 330. The second arm 423 comprises an aperture 428 for coupling the second arm 423 for coupling the second arm 423 to the other of the two connecting points 327. A support arm 425 connects between the first arm 422 and the second arm 423 to strengthen the suspension arm assembly 420. A coupling point 421 is provided for coupling the connecting rod 482 to the suspension arm 420. In the embodiment shown, the coupling point 421 is a plate located at a junction of the support arm 425 and the second arm 423.

FIG 20 shows a top view of the spring and shock absorber 450. The spring and shock absorber 450 comprises a spring 455 and a damper assembly 456. The spring and shock absorber 450 also comprises a first aperture 452 at a first end for coupling to the pin 429 of the suspension arm assembly 420 and a second aperture 453 at a second end for coupling to the pin 337 of the shock tower 335.

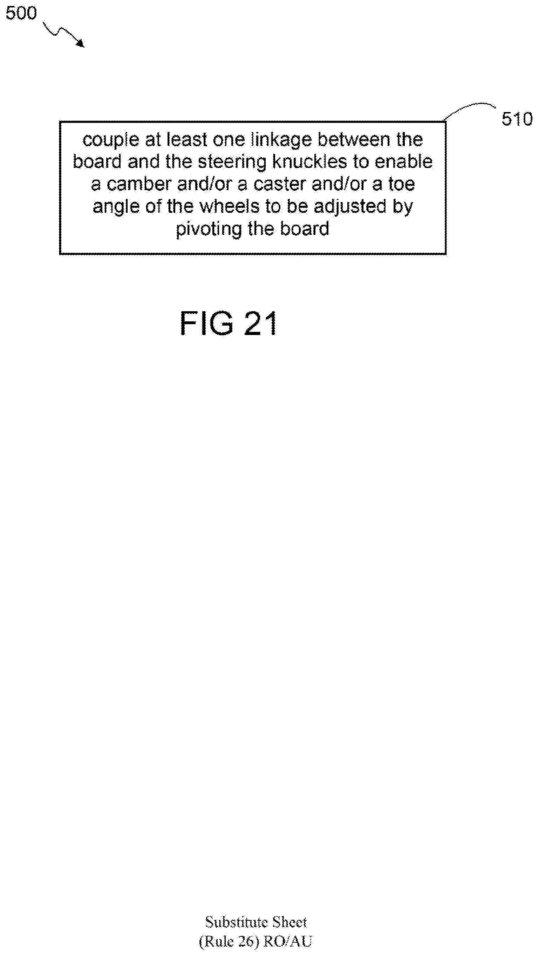

FIG 21 shows a flow diagram of a method 500 of constructing a wheeled apparatus for board sports comprising a board and a plurality of wheels supported by a plurality of steering knuckles, according to another aspect of the present invention. The method 500 comprises step 510 at which at least one linkage is coupled between the board and the steering knuckles to enable a camber and/or a caster and/or a toe angle of the wheels 260 to be adjusted by pivoting the board.

Hence, embodiments of the present invention address or at least ameliorate the aforementioned problems of the prior art. For example, by having independent suspension systems 200 for each wheel 260, the wheels can individually follow the contours of the surface over which the apparatus 100 is travelling, thereby increasing grip. The suspension systems 200 also absorbs impacts, thereby allowing the rider to traverse rough terrain and perform bigger jumps than otherwise possible with the prior art. By incorporating steering links 240, the apparatus is more responsive to turning than the prior art devices. Furthermore, incorporating linkage arm assemblies 230 to modify the caster and/or camber and/or toe angle of the wheels, it is easier to drift whilst turning, which is often a desirable effect.

Throughout the specification the aim has been to describe the preferred embodiments of the invention without limiting the invention to any one embodiment or specific collection of features. It is to be appreciated by those of skill in the art that various modifications and changes can be made in the particular embodiments exemplified without departing from the scope of the present invention.

In this specification, the terms "comprise", "comprises", "comprising" or similar terms are intended to mean a non-exclusive inclusion, such that a system, method or apparatus that comprises a list of elements does not include those elements solely, but may well include other elements not listed.

## Claims

1. A wheeled apparatus (100) for board sports comprising:
a board; (105) a plurality of wheels (260, 460) supported by a plurality of steering knuckles (210,410); and
at least one linkage (125,230,232,430) between the board and the steering knuckles to enable a camber and/or a caster and/or a toe angle of the wheels to be adjusted by pivoting the board, **characterised in that** the at least one linkage comprises an electronic linkage in the form of a sensor for detecting pivoting of the board, the sensor in communication with an actuator coupled to one of the steering knuckles.

2. The wheeled apparatus of claim 1, wherein the wheeled apparatus comprises four wheels.

3. The wheeled apparatus of claim 1, wherein the wheeled apparatus further comprises a chassis to which the board is pivotally coupled.

4. The wheeled apparatus of claim 3, wherein the board pivots laterally about the chassis.

5. The wheeled apparatus of claim 4, wherein the wheeled apparatus comprises one or more suspension systems coupled to the chassis and to the steering knuckles.

6. The wheeled apparatus of claim 5, wherein the one or more suspension systems include a left suspension system and a right suspension system, and an anti-roll bar is coupled between the left suspension system and the right suspension system to mitigate a rolling of the chassis when the board is pivoted.

7. The wheeled apparatus of claim 6, wherein the at least one linkage pivots the respective steering knuckle about a pivot axis defined by one or more of the suspension systems.

8. The wheeled apparatus of claim 4, wherein the wheeled apparatus further comprises one or more springs coupled to the board and the chassis to resist the pivoting of the board and to return the board to a neutral position.

9. The wheeled apparatus of claim 1, wherein the wheeled apparatus comprises one or more motors to drive one or more of the plurality of wheels.

10. The wheeled apparatus of claim 9, wherein the wheeled apparatus comprises one or more controllers in communication with the one or more motors to enable a user to control the speed and/or direction of the one or more motors.

11. The wheeled apparatus of claim 9, wherein the wheeled apparatus comprises a carriage fixed to the board to house one or more batteries and/or control systems to power and/or control the one or more motors.

12. The wheeled apparatus of claim 10, wherein the one or more controllers are configured to detect the power usage of each motor, and to independently regulate power delivery to each motor to optimise power use efficiency.

13. The wheeled apparatus of claim 10, wherein the one or more controllers are configured to detect the speed of each wheel and to independently regulate wheel speeds to control handling characteristics of the wheeled apparatus.

## Patentansprüche

1. Eine Vorrichtung (100) mit Rädern für Brettsportarten, beinhaltend:
ein Brett (105);
eine Vielzahl von Rädern (260, 460), die von einer Vielzahl von Achsschenkeln (210, 410) getragen wird; und
mindestens eine Kopplung (125, 230, 232, 430) zwischen dem Brett und den Achsschenkeln, um zu ermöglichen, dass ein Sturz- und/oder ein Lenkkopf- und/oder ein Spurwinkel der Räder durch Schwenken des Bretts angepasst wird, **dadurch gekennzeichnet, dass**
die mindestens eine Kopplung eine elektronische Kopplung in Form eines Sensors zum Erfassen des Schwenkens des Bretts beinhaltet, wobei der Sensor in Verbindung mit einem Aktor steht, der an einen der Achsschenkel angeschlossen ist.

2. Vorrichtung mit Rädern gemäß Anspruch 1, wobei die Vorrichtung mit Rädern vier Räder beinhaltet.

3. Vorrichtung mit Rädern gemäß Anspruch 1, wobei die Vorrichtung mit Rädern ferner ein Fahrgestell beinhaltet, an welches das Brett schwenkbar angeschlossen ist.

4. Vorrichtung mit Rädern gemäß Anspruch 3, wobei das Brett lateral um das Fahrgestell schwenkt.

5. Vorrichtung mit Rädern gemäß Anspruch 4, wobei die Vorrichtung mit Rädern ein oder mehrere Aufhängungssysteme beinhaltet, die an das Fahrgestell und an die Achsschenkel angeschlossen sind.

6. Vorrichtung mit Rädern gemäß Anspruch 5, wobei das eine oder die mehreren Aufhängungssysteme ein linkes Aufhängungssystem und ein rechtes Aufhängungssystem umfassen und ein Querstabilisator zwischen dem linken Aufhängungssystem und dem rechten Aufhängungssystem angeschlossen ist, um ein Wanken des Fahrgestells zu mindern, wenn das Brett verschwenkt wird.

7. Vorrichtung mit Rädern gemäß Anspruch 6, wobei die mindestens eine Kopplung den jeweiligen Achsschenkel um eine Schwenkachse schwenkt, die von einem oder mehreren der Aufhängungssysteme definiert wird.

8. Vorrichtung mit Rädern gemäß Anspruch 4, wobei die Vorrichtung mit Rädern ferner eine oder mehrere Federn beinhaltet, die an das Brett und das Fahrgestell gekoppelt sind, um dem Schwenken des Bretts standzuhalten und das Brett in eine neutrale Position zurückzuführen.

9. Vorrichtung mit Rädern gemäß Anspruch 1, wobei die Vorrichtung mit Rädern einen oder mehrere Motoren beinhaltet, um eine oder mehrere der Vielzahl von Rädern anzutreiben.

10. Vorrichtung mit Rädern gemäß Anspruch 9, wobei die Vorrichtung mit Rädern eine oder mehrere Steuerungen beinhaltet, die mit dem einen oder den mehreren Motoren in Verbindung stehen, um zu ermöglichen, dass ein Benutzer die Drehzahl und/oder die Richtung des einen oder der mehreren Motoren steuert.

11. Vorrichtung mit Rädern gemäß Anspruch 9, wobei die Vorrichtung mit Rädern einen Schlitten beinhaltet, der an dem Brett befestigt ist, um eine oder mehrere Batterien und/oder Steuerungssysteme unterzubringen, um den einen oder die mehreren Motoren mit Strom zu versorgen und/oder zu steuern.

12. Vorrichtung mit Rädern gemäß Anspruch 10, wobei die eine oder die mehreren Steuerungen dazu konfiguriert sind, den Stromverbrauch eines jeden Motors zu erfassen und unabhängig voneinander die Stromversorgung eines jeden Motors zu regulieren, um die Stromverbrauchseffizienz zu optimieren.

13. Vorrichtung mit Rädern gemäß Anspruch 10, wobei die eine oder mehreren Steuerungen dazu konfiguriert sind, die Drehzahl eines jeden Rades zu erfassen und die Räderdrehzahlen unabhängig voneinander zu regulieren, um die Handhabungseigenschaften der Vorrichtung mit Rädern zu steuern.

## Revendications

1. Un appareil à roues (100) pour des sports de planche comprenant :
une planche (105) ;
une pluralité de roues (260, 460) soutenues par une pluralité de fusées de direction (210, 410) ; et
au moins une liaison (125, 230, 232, 430) entre la planche et les fusées de direction pour permettre à un angle de carrossage et/ou de chasse et/ou de pincement des roues d'être ajusté par pivotement de la planche, **caractérisé en ce que** l'au moins une liaison comprend une liaison électronique sous la forme d'un capteur de détection de pivotement de la planche, le capteur étant en communication avec un actionneur couplé à l'une des fusées de direction.

2. L'appareil à roues de la revendication 1, l'appareil à roues comprenant quatre roues.

3. L'appareil à roues de la revendication 1, l'appareil à roues comprenant en outre un châssis auquel la planche est couplée de façon pivotante.

4. L'appareil à roues de la revendication 3, dans lequel la planche pivote latéralement autour du châssis.

5. L'appareil à roues de la revendication 4, l'appareil à roues comprenant un ou plusieurs systèmes de suspension couplés au châssis et aux fusées de direction.

6. L'appareil à roues de la revendication 5, dans lequel les un ou plusieurs systèmes de suspension incluent un système de suspension de gauche et un système de suspension de droite, et une barre antiroulis est couplée entre le système de suspension de gauche et le système de suspension de droite pour atténuer un roulement du châssis lorsque la planche est amenée à pivoter.

7. L'appareil à roues de la revendication 6, dans lequel l'au moins une liaison fait pivoter la fusée de direction respective autour d'un axe de pivot défini par un ou plusieurs des systèmes de suspension.

8. L'appareil à roues de la revendication 4, l'appareil à roues comprenant en outre un ou plusieurs ressorts couplés à la planche et au châssis pour résister au pivotement de la planche et pour ramener la planche à une position neutre.

9. L'appareil à roues de la revendication 1, l'appareil à roues comprenant un ou plusieurs moteurs pour entraîner une ou plusieurs roues de la pluralité de roues.

10. L'appareil à roues de la revendication 9, l'appareil à roues comprenant un ou plusieurs dispositifs de commande en communication avec les un ou plusieurs moteurs pour permettre à un utilisateur de commander la vitesse et/ou la direction des un ou plusieurs moteurs.

11. L'appareil à roues de la revendication 9, l'appareil à roues comprenant un charriot fixé à la planche pour loger une ou plusieurs batteries et/ou un ou plusieurs systèmes de commande pour alimenter en énergie et/ou commander les un ou plusieurs moteurs.

12. L'appareil à roues de la revendication 10, dans lequel les un ou plusieurs dispositifs de commande sont configurés pour détecter la consommation d'énergie de chaque moteur, et pour, de façon indépendante, réguler l'apport en énergie à chaque moteur afin d'optimiser l'efficacité de l'utilisation d'énergie.

13. L'appareil à roues de la revendication 10, dans lequel les un ou plusieurs dispositifs de commande sont configurés pour détecter la vitesse de chaque roue et pour, de façon indépendante, réguler des vitesses de roues afin de commander des caractéristiques de maniabilité de l'appareil à roues.
